Europäisches Patentamt

(19) European Patent Office

Office européen des brevets

(11) EP 0 521 957 B1

## (12) EUROPEAN PATENT SPECIFICATION

(45) Date of publication and mention
of the grant of the patent:
**03.03.1999 Bulletin 1999/09**

(21) Application number: **91906561.5**

(22) Date of filing: **26.03.1991**

(51) Int. Cl.$^6$: **A01N 25/04**, A01N 25/00

(86) International application number:
**PCT/GB91/00451**

(87) International publication number:
**WO 91/14365 (03.10.1991 Gazette 1991/23)**

(54) **SPRAYABLE AGRICULTURAL COMPOSITIONS**

SPRÜHBARE LANDWIRTSCHAFTLICHE ZUSAMMENSETZUNGEN

COMPOSITIONS AGRICOLES PULVERISABLES

(84) Designated Contracting States:
**AT BE CH DE DK ES FR GB GR IT LI LU NL SE**

(30) Priority: **26.03.1990 GB 9006676**

(43) Date of publication of application:
**13.01.1993 Bulletin 1993/02**

(73) Proprietor:
**ALLIED COLLOIDS LIMITED
Bradford, West Yorkshire BD12 0JZ (GB)**

(72) Inventor:
**CHAMBERLAIN, Peter
40 Moorhead Lane
West Yorkshire BD18 4JT (GB)**

(74) Representative:
**Lawrence, Peter Robin Broughton
GILL JENNINGS & EVERY,
Broadgate House,
7 Eldon Street
London EC2M 7LH (GB)**

(56) References cited:
**WO-A-88/10069          WO-A-89/03175
CA-A-  785 706          CA-A- 1 023 264
US-A- 4 126 443**

- **J. ENVIRON. SCI. HEALTH, Vol. 25, No. 3, 1990
  Alam Sundaram: "Effect of a nalco-trol II on
  bioavailability of glyphosate in laboratory trials
  ",**
- **Patent Abstracts of Japan, Vol 7, No 161, C176,
  abstract of JP 58- 72501, publ 1983-04-30**
- **Patent Abstracts of Japan, Vol 10, No 252, C369,
  abstract of JP 61- 78701, publ 1986-04-22**

**Description**

This invention relates to foliar systemic compositions, that is to say compositions that are to be sprayed on to plants to administer a systemic active ingredient that is absorbed through the leaves and into the plant.

Conventional practice is to form a sprayable composition of the active ingredient by dispersing or dissolving into water a concentrate containing the active ingredient. It is known that various adjuvants can be included in the sprayable composition and some of them may be included in the initial concentrate. Others are added to the sprayable composition.

In particular, it is known to add adjuvants to alter the contact between the spray droplets and the leaves and to alter the nature of the spray and spray pattern that is obtained from the sprayable composition.

For instance it is known that the presence of emulsifier or a combination of oil and emulsifier can effect desirable changes on the contact between the sprayed droplets and the leaves. Thus it is possible to improve wetting and to improve penetration of the wax cuticle of the leaves by the use of emulsifier or oil with emulsifier.

It has been proposed to include very low molecular weight, highly anionic, polymer as a crystalisation inhibitor in one particular herbicide composition in U.S. 4,126,443. There have also been more general proposals to include higher molecular weight polymers. These polymeric materials are added to increase the size of the spray droplets so as to reduce drift, and have the consequence of altering and generally reducing the spray angle. Also, such a polymer in the solution may tend to act as a sticker, to promote adhesion of the active ingredient to the leaves so as to improve persistence even if it rains soon after spraying. In practice, the materials that have generally been proposed are reverse phase emulsions, and a typical disclosure is in Canadian patent 1,023,264. Such materials have been commercially available under the name Nalcotrol from Nalco Chemical Company and Bandrift from Allied Colloids Limited.

Despite the proposals in the literature, and the commercial availability of suitable materials, in fact there has been very little use of products such as Nalcotrol and Bandrift. The reason for this is that it seems user did not judge to have been considered that there was insufficient economic justification for their use. This was probably because it was considered that the materials gave no significant advantage as regards sticker or other performance after contact of the spray droplets with the leaves, and because it was contrary to good farming practice to spray when wind conditions were such that there was any benefit in having a spray drift inhibitor. Also, the larger drop size that is a necessary consequence of reducing spray drift might be expected to reduce coverage and therefore activity.

Also, it appears that there has been some concern that the polymer might interfere with the systemic activity of the active ingredient. Thus in J Environ Sci Health, volume B25(3), 1990, pages 309 to 332 (published after the priority date of this application) Sundaram reported investigations into the effect of Nalcotrol on bioavailability of glyphosate in laboratory trials on seedlings of Trembling Aspen (Populus Tremuloids). He conducted studies into small differences in the sub-lethal effects of such compositions and concluded that there were no significant differences in the absorption and translocation patterns and growth parameters between plants treated with glyphosate alone and plants treated with glyphosate combined with Nalcotrol.

When preparing a sprayable composition of an active ingredient such as glyphosate (which is water soluble) and a reverse phase polymeric dispersion, the standard practice has been first to dilute or disperse the active ingredient into water to form a sprayable composition and subsequently to add the reverse phase polymer to the sprayable composition. This is described at, for instance, page 20 line 5 of CA 1023264.

The present invention is based on the surprising discovery that, when one studies a range of plants, there is an overall improvement in systemic activity when the spray droplets that contact the leaves contain a solution of certain polymers in addition to a solution or emulsion of the systemic active ingredient. Thus we have discovered that there is a significant performance benefit in the incorporation of such polymers when spraying under substantially static air conditions such that conventional thinking would dictate that there would be absolutely no value in adding a spray drift inhibitor such as Bandrift or Nalcotrol.

In particular, by incorporating the polymer solution into the sprayed droplets on the leaves it is possible with many substrates to obtain the same systemic activity in the presence of the polymer as is obtained at a much higher concentration of active ingredient in the absence of the polymer. For instance it may be possible on some substrates to halve the concentration of active ingredient and yet still obtain a systemic lethal effect on the substrate.

It seems that the presence of the dissolved polymer results in accelerated transport and translocation of the active ingredient into and within the plants, with consequential improvement in the prospects of lethal effects on the plant. For instance there can be significant translocation within 45 minutes of spraying. It seems that the rain persistence or sticking properties of the sprayed composition is irrelevant to this effect, since the advantage is shown both when rain occurs and when it does not.

It is well known that water soluble polymers tend to be rather difficult to activate, that is to say to put into a form in which they are in stable equilibrium with the aqueous solution in which they are being dissolved. If the polymers are wholly linear and soluble then this stable equilibrium form is true solution but if they are lightly cross linked then this form may involve the formation of a stable emulsion of highly swollen individual aqueous polymer particles that are in equilibrium with the aqueous phase. The polymer should be fully activated if the desired improvement in systemic activity is to be obtained.

Typical methods of using products such as Nalcotrol and Bandrift would normally not have resulted in this full activation. For instance normally the reverse phase polymeric composition would merely have been stirred gently into the spray solution (that already contains the active ingredient, as in CA 1023264) just prior to spraying, and no particular precautions would have been taken to have ensured total homogenisation and full activation of the polymer particles. Also, in many instances activation would have been inhibited by the fact that the active ingredient had already been distributed throughout the aqueous sprayable composition and this active ingredient would, in some instances, interfere with the activation of the polymer.

For example, the compositions of glyphosate and Nalcotrol described after the priority date in the said paper by sundaram would have been made, by conventional techniques, by dissolving glyphosate in water and then adding Nalcotrol and then spraying. However the glyphosate is an aqueous electrolyte and so this would tend to inhibit the activation of the polymer particles which, according to Sundaram (page 311) provide a cross linked polymer chain of an unspecified polyvinyl polymer.

The present invention relates to the use of a dissolved, water soluble, acrylamide polymer in a sprayable foliar composition comprising a solution or dispersion of a systemic active ingredient in the composition for improving the systemic activity of spray droplets of the composition which are on the leaves.

The sprayable foliar, systemic composition preferably comprises a solution or dispersion of the systemic active ingredient in a continuous aqueous phase that is a substantial solution of the substantially water soluble acrylamide polymer that has been introduced into the aqueous phase as a reverse phase dispersion of the polymer in an inert oil.

The composition preferably has been made by mixing the reverse phase polymeric composition with the aqueous phase in the absence of the active ingredient, preferably achieving substantially full activation of the polymer, and thereafter mixing the active ingredient into the aqueous phase containing activated polymer. This technique allows optimum activation of the polymer, and this can be manifested by the particles of the inert oil being very small. This is significant because a very small and relatively uniform particle size indicates that there has been very thorough distribution of the reverse phase polymeric composition into the aqueous phase of the sprayable composition and this very thorough distribution will inevitably have promoted substantially full activation of the polymer.

The oil is preferably present in the aqueous phase as an emulsion of oil particles having a weight average particle size of below $25\mu m$. As indicated above, such a composition can best be made by distributing the reverse phase polymer in the water before adding the active ingredient. However this aspect of the invention is not limited to this order of addition since careful choice of emulsifiers and mixing conditions and active ingredient will permit this unique particle size (and good activation of the polymer) to be obtained even when the reverse phase composition is added to a previously formed solution or emulsion of the active ingredient.

Preferably the particle size of the inert oil particles is below $20\mu m$ and most preferably it is below $10\mu m$. Preferably the particle size distribution is relatively narrow. Preferably the number average particle size is within 30%, and preferably within 15%, of the weight average particle size. For instance when the mean particle size (ie weight average) is in the range 10 to $20\mu m$, the median particle size (ie number average) may be from 1 to 2, or at the most 3, $\mu m$ smaller or larger than the mean particle size.

In order to promote the formation of these very small oil particles, and thus full activation of the polymer, it is desirable to increase the self-emulsifying properties of the reverse phase dispersion in water, as well as being desirable to emulsify this composition in water before adding the active ingredient. For instance conventional addition of materials such as Bandrift or Nalcotrol typically will give an oil particle size in the range 50 to $100\mu m$ or more but in the invention a much smaller particle size is obtained by an appropriate combination of mixing conditions and oil-in-water emulsifer. For instance if the composition contains a significantly more effective oil-in-water emulsifying system than conventional, the desired particle size may be obtained merely by pouring the composition into water without any particular agitation.

The small particles of oil seem to give an additional benefit over and above the benefit that is derived from the fact that they are associated with the polymer being well activated. This benefit arises because the oil particles will cover a much larger surface area of the leaf than will be covered by the conventional larger oil particles. For instance if the oil particle diameter is half the conventional diameter then this will give an eight-fold increase in the number of droplets and if the diameter is one third then it will give a twenty seven-fold increase in the number of droplets. This increase in the number probably increases the surface area that is covered by surface coverage by oil droplets and this may promote penetration of the wax cuticle layer.

The use, when spraying plants with a foliar systemic active ingredient composition, of the substantially dissolved polymer in the composition increases the effectiveness of composition that contacts the plants and/or accelerates transport and translocation of the active ingredient into and within the plant. This effect has never previously been observed. In particular, the invention includes such uses where the active ingredient is glyphosate, and in particular such uses when applied to a variety of plant substrates. It is not clear why Sundaram failed to observe the effect, but it is probably a combination of factors, namely he was determining the sub-lethal effect of the composition whereas the invention aims at a lethal effect (when using a herbicide), and his dosages and particular techniques were therefore inadequate to give lethal effects, and he conducted tests on a single plant species.

The acceleration of transport, translocation and improved systemic effect, and generally improved lethal herbicidal effect, is best obtained when the polymer is added to the aqueous phase of spray solution as a reverse phase dispersion, generally as described above, but can also be obtained when the polymer is supplied in any other convenient commercial form provided the user ensures full activation of the polymer before spraying the composition on the chosen substrate.

Systemic control of plants can be achieved by spraying plants with an aqueous composition that is a solution or dispersion of a systemic active ingredient in a continuous aqueous phase that is a substantial solution of the substantial water soluble polymer, that has preferably been introduced into the aqueous phase as a reverse phase dispersion in the general manner described above. Often the active ingredient is a herbicide and the method involves killing of the plants. Preferably the area that is sprayed contains a plurality of varieties of plants, most or all of which preferably are killed by the treatment. In other instances there is one persistent weed in an otherwise empty crop area (e.g., couch grass) or there are a plurality of weeds amongst resistant plants such as relatively mature trees.

The acrylamide polymer is preferably truly soluble in water, being a linear polymer formed from a water soluble monomer or monomer blend. However, it can be a polymer that behaves, to the naked eye, as a soluble polymer in that it goes into a substantially stable dispersion of highly swollen polymer particles in water, and these particles stick to one another and to the leaves on drying. Technically however the particles are insoluble, and can be made by including not more than 30 or 40ppm, and usually not more than 10ppm, of a conventional polyethylenically unsaturated cross linking agent, or other cross linking agent, with the water soluble monomer or monomer blend that is polymerised to form the particles.

The polymer particles can be non-ionic, cationic or anionic. When they are anionic or cationic the monomers used are normally a blend of non-ionic acrylamide monomer with a cationic or anionic monomer. The monomers are normally ethylenically unsaturated monomers that can be allyl or vinyl monomers. Mixtures of soluble and insoluble monomers can be used provided the blend is water soluble, but generally the monomers are all water soluble.

Suitable cationic monomers include dialkylaminoalkyl -(meth) acrylates and -(meth) acrylamides. Suitable anionic monomers include ethylenically unsaturated sulphonic monomers such as 2-acrylamido methyl propane sulphonate and carboxylic monomers such as (meth) acrylic acid.

Preferred polymers are polymers of acrylamide in which 51 to 100% by weight, often 80 to 100%, by weight of the monomer is acrylamide with the balance being one or more other monomers that are generally anionic or cationic.

The preferred polymers are substantially non-ionic since such polymers are more easily compatible with a wide range of ionic and non-ionic active ingredients and surfactants and because they provide a lower viscosity in the spray solution than would ionic polymers, at the same dosage. Thus it is possible to include more non-ionic polymer before viscosity increase becomes a problem. The preferred polymers are formed of 97-100% acrylamide and 3-0% sodium acrylate (by weight).

However polymers having a higher content of sodium acrylate or other anionic groups, for instance up to 10% or even 20% can be used. It is significant that such polymers would have been preferred for the spray drift additives such as in Nalcotrol as the higher anionic content would increase the viscosity and so reduce spray drift. In the invention, however, a large change in viscosity and spray drift is an unnecessary, and often undesirable, property and so the use of wholly non-ionic polymers can be preferred.

Another class of suitable polymers are cationic polymers, for instance formed from 60 to 99%, often 70 to 90%, by weight acrylamide with the balance being cationic monomer, such as any of the cationic monomers listed above.

The polymers used in the invention can have a wide range of molecular weights. However in the invention the polymers are normally polymers that have a viscosity such that they affect the spray drift and spray droplet properties as a result of their viscosity and so will have a relatively high molecular weight, which in practice means intrinsic viscosity generally above 3dl/g, often above 4dl/g, for instance 7 to 15dl/g. However higher intrinsic viscosities can be used.

When the polymer is added as a reverse phase dispersion the weight ratio of polymer to oil is often in the range 1:0.7 to 1:4, often around 1:1.5 to 1:3, and the amount of oil-in-water emulsifying agent is often in the range 2 to 5% based on oil and polymer.

The size of the polymer particles in the reverse phase dispersion should be at least 90% below $3\mu m$ and the formation of the small particles is promoted by including in the reverse phase polymerisation mixture a conventional water-in-oil emulsifying agent (typically having HLB 3-7), such as sorbitan mono-oleate, typically in an amount of 1-5%. Stability of the dispersion during and after polymerisation is frequently improved by including 1-5% of an amphipathic polymeric stabiliser such as a 2:1 copolymer of cetostearyl methacrylate:methacrylic acid.

Reverse phase polymerisation can be initiated and conducted in conventional manner to produce a reverse phase dispersion of aqueous polymer particles dispersed in inert oil.

The amount of water in the dispersion is typically from 1:2 to 1:0.5 parts per part polymer. The dispersion can be used as such but preferably it is dehydrated by azeotropic distillation until it is substantially dry, in known manner.

Oil-in-water emulsifier, typically having HLB above 7, must be present in order to promote distribution of the reverse phase dispersion into water, and to promote activation of the polymer. This can be included in the reverse phase dispersion or can be added separately. If the polymer is added in a form whereby it is not already mixed with appropriate emulsifiers for promoting the distribution of polymer and/or active ingredient into the sprayable composition and/or for wetting the leaves, then such emulsifiers can be added separately, in known manner.

The inert oil of the reverse phase dispersion can be any of the water immiscible, non-aqueous, solvents that can conveniently be used as the continuous phase of a reverse phase polymer dispersion.

The systemic active ingredient that is included can be a plant growth promoter (such as a nutrient), a plant growth regulator, or a pesticide, for instance an insecticide or fungicide or, preferably, a herbicide. Preferably it is soluble in water, most preferably being glyphosate (generally as a water soluble salt) or a potassium, sodium or amine or other water soluble salt of hormone herbicides such as 2,4-D, or CMPP or MCPA.

Water insoluble active ingredients that can be used include Bromoxynil, Ioxynil and Pentanochlor. A water insoluble active ingredient can sometimes conveniently be introduced as a solution in the oil phase of a reverse phase dispersion of polymer. It can then be convenient to incorporate the active ingredient as a solution in oil that is miscible with the inert oil of the reverse phase dispersion.

If the active ingredient is being supplied separately, it can be supplied in any of the conventional forms such as aqueous solutions, water soluble powders or granules, emulsifiable concentrates, oil-in-water emulsions, and so forth.

The composition can be supplied by providing a concentrate and obtaining an agricultural sprayable composition as described above can be obtained by dilution with water. The concentrate can include the foliar active ingredient, but frequently the foliar active ingredient is supplied separately.

The concentrate preferably self-emulsifies into water at 20°C, and preferably at lower temperatures such as 10°C or even 5°C, in order that the desired small particle size is obtained easily upon the addition of the concentrate to water, without any special mixing requirements and preferably spontaneously. Preferably mixing of the type conventionally used for making up sprayable compositions is used so as to ensure uniform distribution of the concentrate throughout the dilution water.

The amount of active ingredient in the concentrate, on a dry weight basis, typically is 20 to 60% (preferably 20-40%) polymer, 35 to 75% (preferably 50-75%) oil and 3 to 15% (preferably 5-10%) oil-in-water emulsifier. The concentrate typically is added to water at a rate of about 0.01 to 1%, often 0.03 to 0.3%, typically to give a polymer concentration of 0.005 to 0.1% (often 0.01 to 0.05%) and an oil concentration of 0.005 to 0.5% (often 0.03 to 0.1%). The amount of active ingredient typically is 0.1 to 5%, often 0.3 to 2%.

The amount of polymer that is incorporated is generally at least 25 grams and frequently at least 100 grams per 1,000 litres of sprayable composition. If the amount is too high it will tend to interfere unacceptably with spray patterns and so generally the amount is not more than around 250 or 300 grams in 1,000 litres.

The amount of active ingredient will be selected according to normal recommended instructions except that, as a result of introducing the polymer, the amount can generally be in the range 50 to 80% of the amount that would normally be recommended as optimum.

The invention is of particular value in the herbicidal treatment of a variety of crop areas and these can include forestry; clean-up of cereal crops before harvest; autumn field clean-up; and use on waxy-headed varieties common in Mediteranean climates.

The described composition can also be sprayed on to growing plants and the active ingredient is thereby absorbed through the leaves of the plant to exert a systemic activity.

A process of controlling plants comprises the steps of forming a sprayable foliar systemic herbicidal composition containing glyphosate by dispersing into water a reverse phase composition comprising the water soluble polymeric material dispersed in an inert oil and thereby emulsifying the inert oil into the aqueous phase and dispersing or dissolving the polymeric material into the aqueous phase, subsequently dissolving the glyphosate into the aqueous phase, and spraying the resultant solution on to growing plants and thereby killing them.

Although the invention is of particular value with glyphosate and other water soluble materials such as Mecoprop-P and Clopyralid, it is also of value with insoluble materials such as Quizalofop-ethyl, Fluoxypyr, Sethoxydim, Fluazifop-p-Butyl, Fenoxaprop-Ethyl and Metsulfuron-Methyl.

An important aspect of the invention is that the presence of the polymer results in the active ingredient generally having a better spectrum of activity on a range of plants or pests but it does not guarantee that it will have better activity on every individual plant variety or pest. Accordingly, although the following examples demonstrate an overall improvement in the spectrum of activity against various plants, it will be noted that there are a few isolated instances where activity is worse with the polymer than without, for instance in some of the tests with hazel in examples 2 and 3. However this does not detract from the fact that the presence of polymer clearly gives a benefit in the overall spectrum of activity, against other plants, with the result that the invention gives the opportunity for frequently reducing the dosage of active ingredient that is required in general field use.

The following are examples.

Example 1

Three reverse phase dispersions A, B and C of non-ionic polyacrylamide were made by reverse phase emulsion polymerisation in conventional manner to a polymer particle size of below $3\mu m$. Dispersion A is typical of commercial agricultural sticker compositions. Dispersions B and C are dispersion suitable for the invention but the increased amount of oil in Dispersion B results in it being preferred.

| | | Dispersion A | Dispersion B | Dispersion C |
|---|---|---|---|---|
| 1. | Non-ionic polyacrylamide | 50 | 25 | 50 |
| 2. | W/O emulsifer HLB 4.3 | 1.0 | 1.17 | 2.79 |
| 3. | Amphipathic stabiliser | 1.7 | 1.76 | 2.35 |
| 4. | O/W emulsifier | 4.0 | 6.59 | 5.66 |
| 5. | Hydrocarbon oil | 43.3 | 64.8 | 37.8 |
| Component 1 has molecular weight about 5 million<br>Component 2 is sorbitan mono-oleate<br>Component 3 is 2:1 copolymer of cetostearyl methacrylate and methacrylic acid<br>Component 4 is a blend of 2 parts nonyl phenol ethoxylate (5 moles ethylene oxide HLB 10.5) with 1 part $C_{12-15}$ alcohol ethoxylate (4 moles ethylene oxide, HLB 9.8)<br>Component 5 is Pale Oil 150 | | | | |

Sprayable solutions were prepared by gently mixing into 1 litre water 16ml of a 480g/l aqueous solution Glyphosate (as amine salt) and 0.5ml of Dispersions A or C or 1ml Dispersion B.

The compositions were made either by a "pre-addition" technique (in which the polymer dispersion was dissolved in the water before adding the glyphosate) or by a "post-addition" technique in which the glyphosate was dissolved before adding the polymer.

The median and mean oil particle sizes ($\mu m$) were recorded for "post-addition" and "pre-addition".

| | Pre-addition | | Post-addition | |
|---|---|---|---|---|
| | median | mean | median | mean |
| Dispersion A | 27 | 36 | about 100 | about 100 |
| Dispersion B | about 1 | about 1 | 20 | 32 |
| Dispersion C | 10 | 7 | 12 | 17 |

When sprayed on to vegetation, compositions A are least effective and composition B made by pre-addition is the most effective.

Example 2

Winter barley (variety Igri) was grown in trays of compost (10 seeds per tray) in a growing room.

At the 2 leaf stage, the barley plants were sprayed with their respective treatment.

Each treatment was replicated 3 times. Treatments were applied using a propane pressurised sprayer, fitted with a rotary belt on which the trays were placed. A volume of water equivalent to 500 litre/hectare ($5l/km^2$) was used

at a pressure of 3.0 bar (3 x $10^5$Pa), through a Lurmark 015 F80 flat fan nozzle.

Glyphospate was sprayed at two concentrates, at doses known to be sub-lethal, with and without Adjuvant D, which is an inverse dispersion containing:-

| | |
|---|---|
| 1. Non-ionic polyacrylamide (IV=8dl/g) | 25.0% |
| 2. Water-in-oil Emulsifier HLB 4.3 | 1.1% |
| 3. Amphipathic stabiliser | 1.7% |
| 4. Oil-in-water Emulsifier | 7.0% |
| 5. Hydrocarbon oil (Pale Oil 150) | 65.2% |
| | 100.0% |

Component 2 is a sorbitan mono-oleate
Component 3 is a 2:1 copolymer of cetostearyl methacrylate and methacrylic acid.
Component 4 is a blend of 2 parts nonylphenol ethoxylate (5 mole ethylene oxide HLB 10.5) with 1 part $C_{12-15}$ alcohol ethoxylate (4 mole ethylene oxide, HLB 9.8)

This product was added directly the the spray tank at a rate of 0.1% of the spray volume (equivalent to a polymer dosage of 0.025%), prior to addition of glyphosate.

Some trays were subjected to "rainfall"; this consisted of treating the trays with 5mm of water from the spray, 45 minutes after initial treatment. The results are summarised in Table 1 in which the percentage regrowth is an indication of the extent of growth obtained after the specified time (day 3 or day 13) after cutting the plant down subsequent to spraying. The percentage kill is a subjective assessment taken at day 17 as to the percentage of plants that have died or are dying.

Table 1

| Treatment No. | 1 | 2 | 3 | 4 | 5 | 6 | 7 |
|---|---|---|---|---|---|---|---|
| Glyphosate (grams/ha) | 0 | 250 | 250 | 375 | 375 | 375 | 375 |
| Adjuvant | 0 | 0 | +D | 0 | 0 | +D | +D |
| Rainfall | - | - | - | - | + | - | + |
| Regrowth % | | | | | | | |
| Day 3 | 100 | 22.4 | 21.4 | 8.8 | 21.0 | 7.0 | 16.0 |
| Day 13 | 100 | 30.2 | 21.7 | 19.0 | 19.1 | 4.7 | 10.7 |
| Kill % | 0 | 28 | 55 | 70 | 48 | 80 | 55 |

It can be seen that both dose levels of glyphosate, the presence of Adjuvant D enhances the activity of glyphosate, as shown by the reduction in regrowth, and the increase in kill.

In presence of rain, the activity of glyphosate is reduced, but the presence of Adjuvant D still leads to increased efficacy of glyphosate.

Example 3

Glyphosate was sprayed at a dosage of 250g /ha, in a spray volume of 150 1/ha. Adjuvant D, where included, was present at a rate of 0.1% of the spray volume (150 ml/ha), by addition to the water before the glyphosate is dissolved in it.

The plot was sprayed during an overcast dry spell with a temperature of 17°C. The foliage was damp, the relative humidity was 80% and no rain fell during the next 2 hours.

Reduction in Green Plant Mass (%) was assessed approximately one month later and the results are in Table 2.

Table 2

| | Glyphosate I | | Glyphosate II | | Glyphosate III | |
|---|---|---|---|---|---|---|
| | -D | +D | -D | +D | -D | +D |
| Birch | 70 | 100 | 90 | 100 | 70 | 95 |
| Hazel | 30 | 50 | 42 | 20 | 10 | 10 |
| Rowan | 70 | 100 | 70 | 90 | 50 | 70 |
| Raspberry | 20 | 20 | - | - | 10 | 10 |

The trial site had spruce trees of appoximately 10 years maturity on it and there was no damage to these by the spraying with any of the formulations.

Example 4

Dosages and spray volumes were identical to those in Example 3.
The plot was sprayed during a hazy dry spell. The temperature was 18°C with relatively high humidity.
Reduction in Green Plant Mass (%) was assessed approximately one month later. The results are summarised in Table 3.

Table 3

| | Glyphosate I | | Glyphosate II | | Glyphosate III | |
|---|---|---|---|---|---|---|
| | -D | +D | -D | +D | -D | +D |
| Birch | 20 | 60 | 30 | 60 | | |
| Hazel | 20 | 80 | 10 | 60 | 25 | 20 |
| Aspen | - | - | | | 20 | 20 |
| Black Alder | 10 | 40 | 10 | 10 | | |

Field results involving the use of glyphosate are always subject to the types of variations obtained in examples 2 and 3. However, it is evident that for most trials run, in either example, that the presence of adjuvant D in the formulation increases the efficacy of the glyphosate.
In each of these examples the amount of active ingredient is calculated on the amount equivalent to glyphosate, but in practice the active ingredient was generally introduced as the isopropylamine salt of glyphosate (with 480 grams of the salt being equivalent to 360 grams of the glyphosate).

Example 5

An aqueous solution of the polymer was formed by mixing adjuvant D with water and glyphosate was then added. In other tests glyphosate was added to water in the absence of D. the solution was then used in field trials and the percentage kill was recorded. The results are shown in Table 4.

8

Table 4

| | | Percentage Kill | | | | |
|---|---|---|---|---|---|---|
| Glyphosate (L/ha) | | 0 | 1 | 1 | 2 | 2 |
| Adjuvant | | 0 | 0 | +D | 0 | +D |
| Couch | | | | | | |
| Trial | 1 | 0 | 82.5 | 89.5 | 89.5 | 93.8 |
| | 2 | 0 | 73.8 | 80.0 | 85.8 | 90.8 |
| | 3 | 0 | 67.5 | 68.8 | 73.8 | 78.8 |
| | 4 | 0 | 81.8 | 89.5 | 89.0 | 94.5 |
| Annual Meadowgrass | | | | | | |
| Trial | 5 | 0 | 85.8 | 90.0 | 90.0 | 94.5 |
| | 6 | 0 | 83.8 | 90.0 | 90.8 | 92.3 |
| Sowthistle | | | | | | |
| Trial | 5 | 0 | 32.5 | 47.5 | 47.5 | 56.3 |

This shows that the lower concentration of glyphosate with polymer is frequently as effective as the higher concentration without polymer.

**Claims**

1.   The use of a dissolved, water soluble, acrylamide polymer in a sprayable foliar composition comprising a solution or dispersion of a systemic active ingredient in the composition for improving the systemic activity of spray droplets of the composition which are on the leaves.

2.   A use according to claim 1 in which the acrylamide polymer has intrinsic viscosity above 3dl/g.

3.   A use according to claim 1 or claim 2 in which the polymer is formed of 51 to 100% acrylamide and 0 to 49% by weight ethylenically unsaturated monomer selected from anionic and cationic monomers and is in the sprayable composition in an amount of 0.005 to 0.1% by weight.

4.   A use according to any preceding claim in which the polymer is a polymer of 97 to 100% by weight acrylamide and 0 to 3% by weight sodium acrylate.

5.   A use according to any preceding claim in which the sprayable, foliar composition is formed by providing a reverse emulsion in oil of the water soluble acrylamide polymer, dispersing this emulsion in an aqueous phase and with a combination of oil-in-water emulsifier and mixing conditions whereby there is formed an emulsion of the oil as particles which have a weight average particle size of below $25\mu m$ in a solution of the polymer, and incorporating the foliar systemic active ingredient in the aqueous phase, and thereby forming a dilute sprayable composition containing the active ingredient and a solution of the polymer with the oil emulsified therein having a weight average particle size of below $25\mu m$.

6.   A use according to claim 5 in which the reverse phase emulsion is dispersed in the aqueous phase to form the emulsion of oil particles below $25\mu m$ and the foliar systemic active ingredient is thereafter incorporated into the aqueous phase containing the emulsion.

7.   A use according to claim 5 or claim 6 in which the weight average particle size of the oil particles is below $10\mu m$.

8.   A use according to any of claims 5 to 7 in which the number average particle size of the oil particles is within 30% of the weight average particle size.

9. A use according to any preceding claim in which the sprayable composition contains 0.1 to 5% by weight of the active ingredient.

10. A use according to any preceding claim in which the active ingredient is a plant growth regulator or a herbicide.

11. A use according to any preceding claim in which the active ingredient is glyphosate.

12. A use according to any of claims 1 to 3 and 5 to 11 in which the polymer is a polymer of 80 to 100% by weight acrylamide and 0 to 20% by weight anionic ethylenically unsaturated monomer.

13. A use according to any preceding claim in which the polymer has intrinsic viscosity 4 to 15dl/g.

14. A use according to claims 1-10 and 12-13 in which the active ingredient is selected from chlormequat, diquat, chlorpyralid and hormone weedkillers.

**Patentansprüche**

1. Verwendung eines gelösten, wasserlöslichen Acrylamid-Polymers in einer sprühbaren Zusammensetzung für Blätter, umfassend eine Lösung oder Dispersion eines systemischen Wirkstoffs in der Zusammensetzung, zur Verbesserung der systemischen Aktivität von Spraytröpfchen der Zusammensetzung, die sich auf den Blättern befinden.

2. Verwendung nach Anspruch 1, bei der das Acrylamid-Polymer eine Grenzviskositätszahl über 3 dl/g hat.

3. Verwendung nach Anspruch 1 oder Anspruch 2, bei der das Polymer gebildet ist aus 51 bis 100 Gew.-% Acrylamid und 0 bis 49 Gew.-% ethylenisch ungesättigtem Monomer, ausgewählt aus anionischen und kationischen Monomeren, und in der sprühbaren Zusammensetzung in einer Menge von 0,005 bis 0,1 Gew.-% vorhanden ist.

4. Verwendung nach irgendeinem vorangehenden Anspruch, bei der das Polymer ein Polymer von 97 bis 100 Gew.-% Acrylamid und 0 bis 3 Gew.-% Natriumacrylat ist.

5. Verwendung nach irgendeinem vorangehenden Anspruch, bei der die sprühbare Zusammensetzung für Blätter gebildet wird durch Bereitstellen einer reversen Emulsion des wasserlöslichen Acrylamid-Polymers in Öl, Dispergieren dieser Emulsion in einer wäßrigen Phase und mit einer Kombination von Öl-in-Wasser-Emulgator und Mischbedingungen, welche zur Bildung einer Emulsion des Öls als Teilchen, die ein Gewichtsmittel der Teilchengröße von weniger als 25 μm aufweisen, in einer Lösung des Polymers führen, und Einbringen des systemischen Wirkstoffs für Blätter in die wäßrige Phase, wodurch eine verdünnte sprühbare Zusammensetzung gebildet wird, die den Wirkstoff und eine Lösung des Polymers mit dem darin emulgierten Öl, das ein Gewichtsmittel der Teilchengröße von weniger als 25 μm aufweist, enthält.

6. Verwendung nach Anspruch 5, bei der die Umkehrphasen-Emulsion in der wäßrigen Phase dispergiert wird, um die Emulsion der Ölteilchen von weniger als 25 μm zu bilden, und der systemische Wirkstoff für Blätter anschließend in die wäßrige Phase, welche die Emulsion enthält, eingebracht wird.

7. Verwendung nach Anspruch 5 oder Anspruch 6, bei der das Gewichtsmittel der Teilchengröße der Ölteilchen weniger als 10 μm beträgt.

8. Verwendung nach irgendeinem der Ansprüche 5 bis 7, bei der das Zahlenmittel der Teilchengröße der Ölteilchen innerhalb 30% des Gewichtsmittels der Teilchengröße liegt.

9. Verwendung nach irgendeinem vorangehenden Anspruch, bei der die sprühbare Zusammensetzung 0,1 bis 5 Gew.-% des Wirkstoffs enthält.

10. Verwendung nach irgendeinem vorangehenden Anspruch, bei der der Wirkstoff ein Pflanzenwachstumsregler oder ein Herbizid ist.

11. Verwendung nach irgendeinem vorangehenden Anspruch, bei der der Wirkstoff Glyphosat ist.

12. Verwendung nach irgendeinem der Ansprüche 1 bis 3 und 5 bis 11, bei der das Polymer ein Polymer von 80 bis 100 Gew.-% Acrylamid und 0 bis 20 Gew.-% anionischem, ethylenisch ungesättigtem Monomer ist.

13. Verwendung nach irgendeinem vorangehenden Anspruch, bei der das Polymer eine Grenzviskositätszahl von 4 bis 15 dl/g hat.

14. Verwendung nach den Ansprüchen 1 bis 10 und 12 bis 13, bei der der Wirkstoff ausgewählt ist aus Chlormequat, Diquat, Chlorpyralid und Hormon-Unkrautbekämpfungsmitteln.

**Revendications**

1. Utilisation d'un polymère d'acrylamide dissous, soluble dans l'eau, dans une composition foliaire pulvérisable comprenant une solution ou une dispersion d'une substance active systémique dans la composition, afin d'améliorer l'activité systémique des gouttelettes pulvérisées de la composition, qui se trouvent sur les feuilles.

2. Utilisation selon la revendication 1, dans laquelle le polymère d'acrylamide possède une viscosité intrinsèque supérieure à 3 dl/g.

3. Utilisation selon la revendication 1 ou la revendication 2, dans laquelle le polymère est formé de 51 à 100% d'acrylamide et de 0 à 49% en poids d'un monomère éthyléniquement insaturé, choisi parmi les monomères anioniques et cationiques et dans laquelle le polymère est présent dans la composition pulvérisable en une quantité de 0,005 à 0,1% en poids.

4. Utilisation selon l'une quelconque des revendications précédentes, dans laquelle le polymère est un polymère constitué de 97 à 100% en poids d'acrylamide et de 0 à 3% en poids d'acrylate de sodium.

5. Utilisation selon l'une quelconque des revendications précédentes, dans laquelle la composition foliaire pulvérisable est obtenue par formation d'une émulsion inverse dans une huile du polymère d'acrylamide soluble dans l'eau, par dispersion de cette émulsion dans une phase aqueuse et avec une combinaison d'un émulsifiant huile-dans-l'eau et de conditions de mélange, grâce auxquelles il se forme une émulsion de l'huile dans une solution du polymère, sous forme de particules qui présentent une taille particulaire moyenne en poids inférieure à 25 μm, et par incorporation de la substance active foliaire systémique dans la phase aqueuse et ainsi par formation d'une composition pulvérisable diluée contenant la substance active et une solution du polymère, qui contient l'huile émulsifiée, ayant une taille particulaire moyenne en poids inférieure à 25 μm.

6. Utilisation selon la revendication 5, dans laquelle l'émulsion en phase inverse est dispersée dans la phase aqueuse afin de former l'émulsion des particules d'huile inférieures à 25 μm et la substance active foliaire systémique est ensuite incorporée dans la phase aqueuse contenant l'émulsion.

7. Utilisation selon la revendication 5 ou la revendication 6, dans laquelle la taille particulaire moyenne en poids des particules d'huile est inférieure à 10 μm.

8. Utilisation selon l'une quelconque des revendications 5 à 7, dans laquelle la taille particulaire moyenne en nombre des particules d'huile diffère de moins de 30% de la taille particulaire moyenne en poids.

9. Utilisation selon l'une quelconque des revendications précédentes, dans laquelle la composition pulvérisable contient de 0,1 à 5% en poids de la substance active.

10. Utilisation selon l'une quelconque des revendications précédentes, dans laquelle la substance active est un régulateur de croissance des plantes ou un herbicide.

11. Utilisation selon l'une quelconque des revendications précédentes, dans laquelle la substance active est le glyphosate.

12. Utilisation selon l'une quelconque des revendications 1 à 3 et 5 à 11, dans laquelle le polymère est un polymère constitué de 80 à 100% en poids d'acrylamide et de 0 à 20% en poids d'un monomère anionique éthyléniquement insaturé.

13. Utilisation selon l'une quelconque des revendications précédentes, dans laquelle le polymère possède une viscosité intrinsèque comprise entre 4 et 15 dl/g.

14. Utilisation selon les revendications 1 à 10 et 12 à 13, dans laquelle la substance active est choisie parmi le chlorméquat, le diquat, le clopyralid et les herbicides hormonaux.